# EUROPEAN PATENT APPLICATION

(11) **EP 3 922 483 A1**
(43) Date of publication of application: **15.12.2021**
(21) Application number: 21178963.1
(22) Date of filing: 11.06.2021
(51) Int. Cl.: B60C 1/00, C08L 9/06

(54) **PNEUMATIC TIRE AND RUBBER COMPOSITION INCLUDING TETRAZINE MODIFIED ELASTOMER AND ZINC COMPLEX COMPOUND**

(30) Priority: 11.06.2020 US 202063037649 P; 03.03.2021 US 202117190460
(71) Applicant: The Goodyear Tire & Rubber Company, Akron, OH 44316 (US)
(72) Inventor: HAYAT, Jeffery Hakim, Uniontown, 44685 (US); HINTERLONG, Ronda Jane, Macedonia, 44056 (US); MAZUMDAR, Arindam, Stow, 44224 (US)
(74) Representative: Goodyear IP Law

(57) **Abstract**

A vulcanizable or vulcanized rubber composition and a pneumatic tire comprising such a rubber composition is disclosed. The rubber composition comprises, based on parts by weight per 100 parts by weight elastomer (phr):
100 phr of at least one diene-based elastomer;
from 1 to 80 phr of carbon black;
from 40 to 120 phr of silica;
from 1 to 20 parts by weight of a sulfur-containing organosilane per 100 parts by weight of the silica;
from 0.1 to 10 phr of a tetrazine compound of formula 1 or a salt thereof 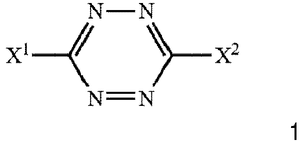 where X¹ and X² each represent a heterocyclic group; and
from 0.5 to 10 phr of a zinc complex compound of formula 2 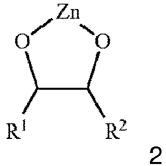 where R¹ and R² are independently selected from the group consisting of hydrogen atoms, alkyl groups, alkylene groups, hydroxyl-substituted alkyl or alkylene groups, amine-substituted alkyl or alkylene groups, and thiol-substituted alkyl or alkylene groups.

## Description

### Background

Rubber compositions containing diene-based elastomers often contain reinforcing fillers such as for example rubber reinforcing carbon black and precipitated silica together with a coupling agent for the precipitated silica. Rubber tires may contain at least one component comprised of such rubber composition.

Various diene-based elastomers may be prepared, for example, by blending the elastomer(s) with rubber reinforcing filler such as rubber reinforcing carbon black and silica reinforcement, particularly precipitated silica reinforcement, together with a silica coupling agent comprised of a bis(3-triethoxysilylpropyl)polysulfide or an organoalkoxymercaptosilane to aid in coupling the silica to the elastomer and enhancing its rubber reinforcing effect. Preparation of such rubber compositions are well known to those having skill in such art.

The use of functionalized elastomers having functional groups that may interact with silica is also known.

Although the mechanism may not be completely understood, relatively high loadings of the rubber composition with precipitated silica and silane can significantly increase the sulfur cure-rate of the rubber composition to an extent of promoting disadvantageously pre-curing of the rubber composition which is sometimes referred to as scorching. Both the relatively fast cure and resulting high compound viscosity can be disadvantageous during compound mixing and subsequent tire build.

In the description of this invention, the term "phr" is used to designate parts by weight of a material per 100 parts by weight of elastomer. The terms "rubber" and "elastomer" may be used interchangeably unless otherwise indicated. The terms "vulcanized" and "cured" may be used interchangeably, as well as "unvulcanized" or "uncured", unless otherwise indicated.

### Summary of the Invention

The invention relates to a rubber composition in accordance with claim 1, and to a pneumatic tire in accordance with claim 13.

Dependent claims refer to preferred embodiments of the invention.

Thus, the invention discloses a vulcanizable rubber composition comprising, based on parts by weight per 100 parts by weight elastomer (phr):
100 phr of at least one diene-based elastomer;
from 1 to 80 phr of carbon black;
from 40 to 120 phr of silica;
from 1 to 20 parts by weight of a sulfur-containing organosilane per 100 parts by weight of the silica;
from 0.1 to 10 phr of a tetrazine compound of formula 1 or a salt thereof 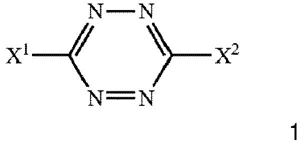 where X¹ and X² each represent a heterocyclic group; and from 0.5 to 10 phr of a zinc complex compound of formula 2 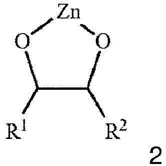 where R¹ and R² are independently selected from the group consisting of hydrogen atoms, alkyl groups, alkylene groups, hydroxyl-substituted alkyl or alkylene groups, amine-substituted alkyl or alkylene groups, and thiol-substituted alkyl or alkylene groups.

### Description of Preferred Embodiments of the Invention

There is disclosed present a vulcanizable or vulcanized rubber composition comprising, based on parts by weight per 100 parts by weight elastomer (phr):
100 phr of at least one diene-based elastomer;
from 1 to 80 phr of carbon black;
from 40 to 120 phr of silica;
from 1 to 20 parts by weight of a sulfur-containing organosilane per 100 parts by weight of the silica;
from 0.1 to 10 phr of a tetrazine compound of formula 1 or a salt thereof 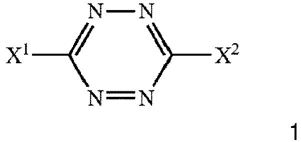 where X¹ and X² each represent a heterocyclic group; and from 0.5 to 10 phr of a zinc complex compound of formula 2 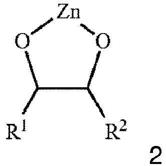 where M is zinc, and R¹ and R² are independently selected from the group consisting of hydrogen atoms, alkyl groups, alkylene groups, hydroxyl-substituted alkyl or alkylene groups, amine-substituted alkyl or alkylene groups, and thiol-substituted alkyl or alkylene groups.

There is further disclosed a pneumatic tire comprising the rubber composition.

Suitable tetrazine compounds include those disclosed in US-A-2018/0273723; US-A-2020/0040167; and Kojima et al, paper A13 presented at the 196th Technical Meeting of the ACS Rubber Division, Cleveland, Ohio, October 9, 2019.

The "heterocyclic group" as used herein is not particularly limited. Examples include 2-pyridyl, 3-pyridyl, 4-pyridyl, 2-pyrazinyl, 2-pyrimidyl, 4-pyrimidyl, 5-pyrimidyl, 3-pyridazyl, 4-pyridazyl, 4-(1,2,3-triazyl), 5-(1,2,3-triazyl), 2-(1,3,5-triazyl), 3-(1,2,4-triazyl), 5-(1,2,4-triazyl), 6-(1,2,4-triazyl), 2-quinolyl, 3-quinolyl, 4-quinolyl, 5-quinolyl, 6-quinolyl, 7-quinolyl, 8-quinolyl, 1-isoquinolyl, 3-isoquinolyl, 4-isoquinolyl, 5-isoquinolyl, 6-isoquinolyl, 7-isoquinolyl, 8-isoquinolyl, 2-quinoxalyl, 3-quinoxalyl, 5-quinoxalyl, 6-quinoxalyl, 7-quinoxalyl, 8-quinoxalyl, 3-cinnolyl, 4-cinnolyl, 5-cinnolyl, 6-cinnolyl, 7-cinnolyl, 8-cinnolyl, 2-quinazolyl, 4-quinazolyl, 5-quinazolyl, 6-quinazolyl, 7-quinazolyl, 8-quinazolyl, 1-phthalazyl, 4-phthalazyl, 5-phthalazyl, 6-phthalazyl, 7-phthalazyl, 8-phthalazyl, 1-tetrahydroquinolyl, 2-tetrahydroquinolyl, 3-tetrahydroquinolyl, 4-tetrahydroquinolyl, 5-tetrahydroquinolyl, 6-tetrahydroquinolyl, 7-tetrahydroquinolyl, 8-tetrahydroquinolyl, 1-pyrrolyl, 2-pyrrolyl, 3-pyrrolyl, 2-furyl, 3-furyl, 2-thienyl, 3-thienyl, 1-imidazolyl, 2-imidazolyl, 4-imidazolyl, 5-imidazolyl, 1-pyrazolyl, 3-pyrazolyl, 4-pyrazolyl, 5-pyrazolyl, 2-oxazolyl, 4-oxazolyl, 5-oxazolyl, 2-thiazolyl, 4-thiazolyl, 5-thiazolyl, 3-isoxazolyl, 4-isoxazolyl, 5-isoxazolyl, 3-isothiazolyl, 4-isothiazolyl, 5-isothiazolyl, 4-(1,2,3-thiadiazolyl), 5-(1,2,3-thiadiazolyl), 3-(1,2,5-thiadiazolyl), 2-(1,3,4-thiadiazolyl), 4-(1,2,3-oxadiazolyl), 5-(1,2,3-oxadiazolyl), 3-(1,2,4-oxadiazolyl), 5-(1,2,4-oxadiazolyl), 3-(1,2,5-oxadiazolyl), 2-(1,3,4-oxadiazolyl), 1-(1,2,3-triazolyl), 4-(1,2,3-triazolyl), 5-(1,2,3-triazolyl), 1-(1,2,4-triazolyl), 3-(1,2,4-triazolyl), 5-(1,2,4-triazolyl), 1-tetrazolyl, 5-tetrazolyl, 1-indolyl, 2-indolyl, 3-indolyl, 4-indolyl, 5-indolyl, 6-indolyl, 7-indolyl, 1-isoindolyl, 2-isoindolyl, 3-isoindolyl, 4-isoindolyl, 5-isoindolyl, 6-isoindolyl, 7-isoindolyl, 1-benzimidazolyl, 2-benzimidazolyl, 4-benzimidazolyl, 5-benzimidazolyl, 6-benzimidazolyl, 7-benzimidazolyl, 2-benzofuranyl, 3-benzofuranyl, 4-benzofuranyl, 5-benzofuranyl, 6-benzofuranyl, 7-benzofuranyl, 1-isobenzofuranyl, 3-isobenzofuranyl, 4-isobenzofuranyl, 5-isobenzofuranyl, 6-isobenzofuranyl, 7-isobenzofuranyl, 2-benzothienyl, 3-benzothienyl, 4-benzothienyl, 5-benzothienyl, 6-benzothienyl, 7-benzothienyl, 2-benzoxazolyl, 4-benzoxazolyl, 5-benzoxazolyl, 6-benzoxazolyl, 7-benzoxazolyl, 2-benzothiazolyl, 4-benzothiazolyl, 5-benzothiazolyl, 6-benzothiazolyl, 7-benzothiazolyl, 1-indazolyl, 3-indazolyl, 4-indazolyl, 5-indazolyl, 6-indazolyl, 7-indazolyl, 2-morpholyl, 3-morpholyl, 4-morpholyl, 1-piperazyl, 2-piperazyl, 1-piperidyl, 2-piperidyl, 3-piperidyl, 4-piperidyl, 2-tetrahydropyranyl, 3-tetrahydropyranyl, 4-tetrahydropyranyl, 2-tetrahydrothiopyranyl, 3-tetrahydrothiopyranyl, 4-tetrahydrothiopyranyl, 1-pyrrolidyl, 2-pyrrolidyl, 3-pyrrolidyl, 2-tetrahydrofuranyl, 3-tetrahydrofuranyl, 2-tetrahydrothienyl, 3-tetrahydrothienyl, and the like. Among these groups, the heterocyclic group is preferably a pyridyl, furanyl, thienyl, pyrimidyl, or pyrazyl group, and is more preferably a pyridyl group.

The heterocyclic group optionally has one or more substituents at any replaceable position. Examples of the substituents include, but are not particularly limited to, halogen atoms and amino, aminoalkyl, alkoxycarbonyl, acyl, acyloxy, amide, carboxyl, carboxyalkyl, formyl, nitrile, nitro, alkyl, hydroxyalkyl, hydroxy, alkoxy, aryl, aryloxy, heterocyclic, thiol, alkylthio, arylthio, and like groups. The number of substituents is preferably 1 to 5, and more preferably 1 to 3.

The "halogen atom" as used herein includes fluorine, chlorine, bromine, and iodine atoms. Preferable halogen atoms are chlorine, bromine, and iodine atoms.

The "amino" as used herein includes an amino group represented by -NH2 and substituted amino groups. Examples of substituted amino groups include C1-6 (particularly C1-4) linear or branched monoalkylamino groups, such as methylamino, ethylamino, n-propylamino, isopropylamino, n-butylamino, isobutylamino, s-butylamino, t-butylamino, I-ethylpropylamino, n-pentylamino, neopentylamino, n-hexylamino, isohexylamino, and 3-methylpentylamino; and dialkylamino groups having two C1-6 (particularly C1-4) linear or branched alkyl groups, such as dimethylamino, ethlmethylamino, and diethylamino.

The "aminoalkyl" as used herein is not particularly limited. Examples include aminoalkyl groups (preferably amino-containing linear or branched alkyl groups having 1 to 6 carbon atoms), such as aminomethyl, 2-aminoethyl, and 3-aminopropyl.

The "alkoxycarbonyl" as used herein is not particularly limited. Examples include methoxycarbonyl and ethoxycarbonyl.

The "acyl" as used herein is not particularly limited. Examples include C1-4 linear or branched alkylcarbonyl groups, such as acetyl, propionyl, and pivaloyl.

The "acyloxy" as used herein is not particularly limited. Examples include acetyloxy, propionyloxy and n-butyryloxy.

The "amide" as used herein is not particularly limited. Examples include carboxylic acid amide groups, such as acetamide and benzamide; thioamide groups such as thioacetamide and thiobenzamide; N-substituted amide groups such as N-methylacetamide and N-benzylacetamide.

The "carboxyalkyl" as used herein is not particularly limited. Examples include carboxy-alkyl groups (preferably carboxy-containing alkyl groups having 1 to 6 carbon atoms), such as carboxymethyl, carboxyethyl, carboxy-n-propyl, carboxy-n-butyl, carboxy-n-pentyl, and carboxy-n-hexyl.

The "hydroxyalkyl" as used herein is not particularly limited. Examples include hydroxyalkyl groups (preferably hydroxy-containing alkyl groups having 1 to 6 carbon atoms), such as hydroxymethyl, hydroxyethyl, hydroxy-n-propyl, and hydroxy-n-butyl.

The "alkyl" as used herein is not particularly limited. Examples include linear, branched, or cyclic alkyl groups. Specific examples include C1-6 (particularly C1-4) linear or branched alkyl groups, such as methyl, ethyl, n-propyl, isopropyl, n-butyl, isobutyl, s-butyl, t-butyl, 1-ethylpropyl, n-pentyl, neopentyl, n-hexyl, isohexyl, and 3-methylpentyl; C3-8 (particularly C3-6) cyclic alkyl groups, such as cyclopropyl, cyclobutyl, cyclopentyl, cyclohexyl, cycloheptyl, and cyclooctyl.

The "hydroxyalkyl" as used herein is not particularly limited. Examples include hydroxyalkyl groups (preferably hydroxy-containing alkyl groups having 1 to 6 carbon atoms), such as hydroxymethyl, hydroxyethyl, hydroxy-n-propyl, and hydroxy-n-butyl.

The "alkoxy" as used herein is not particularly limited. Examples include linear, branched, or cyclic alkoxy groups. Specific examples include C1-6 (particularly C1-4) linear or branched alkoxy groups, such as methoxy, ethoxy, n-propoxy, isopropoxy, n-butoxy, t-butoxy, n-pentyloxy, neopentyloxy, and n-hexyloxy; C3-8 (particularly C3-6) cyclic alkoxy groups, such as cyclopropyloxy, cyclobutyloxy, cyclopenthyloxy, cyclohexyloxy, cycloheptyloxy, and cyclooctyloxy.

The "aryl" as used herein is not particularly limited. Examples include phenyl, biphenyl, naphthyl, dihydroindenyl and 9H-fluorenyl.

The "aryloxy" as used herein is not particularly limited. Examples include phenoxy, biphenyloxy and naphthoxy.

The "alkylthio" as used herein is not particularly limited. Examples include linear, branched, or cyclic alkylthio groups. Specific examples include C1-6 (particularly C1-4) linear or branched alkylthio groups, such as methylthio, ethylthio, n-propylthio, isopropylthio, n-butylthio, isobutylthio, s-butylthio, t-butylthio, I-ethylpropylthio, n-pentylthio, neopentylthio, n-hexylthio, isohexylthio, and 3-methylpentylthio; C3-8 (particularly C3-6) cyclic alkylthio groups, such as cyclopropylthio, cyclobutylthio, cyclopentylthio, cyclohexylthio, cycloheptylthio, and cyclooctylthio.

The "arylthio" as used herein is not particularly limited. Examples include phenylthio, biphenylthio and naphthylthio.

The "salt" of the tetrazine compound represented by Formula 1 is not particularly limited and includes all types of salts. Examples of such salts include inorganic acid salts such as hydrochloride, sulfate, and nitrate; organic acid salts such as acetate and methanesulfonate; alkali metal salts such as sodium salt and potassium salt; alkaline earth metal salts such as magnesium salt and calcium salt; ammonium salts such as dimethylarmonium and triethylammonium.

The tetrazine compounds are preferably compounds wherein X1 and X2 are the same or different, and each represents an optionally substituted pyridyl group, an optionally substituted furanyl group, an optionally substituted thienyl group, an optionally substituted pyrazolyl group, an optionally substituted pyrimidyl group, or an optionally substituted pyrazyl group.

More preferable tetrazine compounds are compounds wherein X1 and X2 are the same or different, and each represents an optionally substituted 2-pyridyl group, an optionally substituted 3-pyridyl group, an optionally substituted 4-pyridyl group, an optionally substituted 2-furanyl group, an optionally substituted 2-thienyl group, an optionally substituted 1-pyrazolyl group, an optionally substituted 2-pyrimidyl group, or an optionally substituted 2-pyrazyl group. Specifically, compounds wherein X1 and X2 are the same or different, and each represents an optionally substituted 2-pyridyl group, an optionally substituted 3-pyridyl group, an optionally substituted 4-pyridyl group, or an optionally substituted 2-furanyl group are particularly preferable.

Specific examples of the tetrazine compound include 3,6-bis(2-pyridyl)-1,2,4,5-tetrazine, 3,6-bis(3-pyridyl)-1,2,4,5-tetrazine, 3,6-bis(4-pyridyl)-1,2,4,5-tetrazine, 3,6-bis(2-furanyl)-1,2,4,5-tetrazine, 3,6-bis(3,5-dimethyl-1-pyrazolyl)-1 ,2,4,5-tetrazine, 3,6-bis(2-thienyl)-1,2,4,5-tetrazine, 3-methyl-6-(2-pyridyl)-1,2,4,5-tetrazine, 3,6-bis(2-pyrimidinyl)-1,2,4,5-tetrazine, 3,6-bis(2-pyrazyl)-1,2,4,5-tetrazine, and the like.

Among these, preferable tetrazine compounds are 3,6-bis(2-pyridyl)-1,2,4,5-tetrazine, 3,6-bis(3-pyridyl)-1,2,4,5-tetrazine, 3,6-bis(2-furanyl)-1,2,4,5-tetrazine, and 3,6-bi(4-pyridyl)-1,2,4,5-tetrazine. More preferably, tetrazine compounds are 3,6-bis(2-pyridyl)-1,2,4,5-tetrazine, 3,6-bis(3-pyridyl)-1,2,4,5-tetrazine, and 3,6-bis(4-pyridyl)-1,2,4,5-tetrazine.

From the viewpoint of imparting rolling resistance to the rubber component, the amount of the tetrazine compound is 0.1 to 10 parts by mass, per 100 parts by mass of the rubber component in the rubber composition. The amount of the tetrazine compound is preferably 0.25 to 7 parts by mass, and more preferably 0.5 to 5 parts by mass, per 100 parts by mass of the rubber component in the rubber composition.

The rubber composition further includes from 0.5 to 10 phr, alternatively 1 to 5 phr, of a zinc complex compound of formula 2 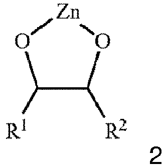 where R¹ and R² are independently selected from the group consisting of hydrogen atoms, alkyl groups, alkylene groups, hydroxyl-substituted alkyl or alkylene groups, amine-substituted alkyl or alkylene groups, and thiol-substituted alkyl or alkylene groups. A suitable zinc complex of formula 2 is as disclosed in US-B-10,087,306.

In one embodiment, the zinc complex compound of formula 2 is zinc glycerolate with R¹ preferably being hydrogen:

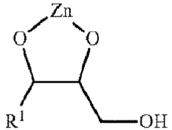

The zinc complex of formula 2 may be present in a formulation along with auxiliary materials including one or more of fatty acids, fatty alcohols, fatty amines, fatty amides, fatty esters, fatty acid metal salts, polyols, polyethylene glycols, polypropylene glycols and nature or sunthetic hydrocarbon waxes and combinations and blends thereof.

In one embodiment, the zinc complex of formula 2 is available as SureMix CO² from Flow Polymers Group of Cleveland, Ohio.

The rubber composition may also include one or more cure inhibitors. Suitable cure inhibtors include N-cyclohexylthiophthalimide, In one embodiment, the cure inhibitor is present in an amount ranging from 0.05 to 0.5 phr. In one embodiment, the cure inhibitor is present in in an amount rangning from 0.1 to 0.4 phr.

The rubber composition includes one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Further examples of functionalized elastomers may be used, including functionalized version of polybutadiene, polyisoprene and styrene-butadiene rubbers. The preferred rubber or elastomers are polyisoprene (natural or synthetic), polybutadiene and SBR.

In one aspect the use of at least one additional rubber is preferably of at least two diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene-based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may from 40 to 120 phr of silica; alternatively, from 50 to 100 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR; and silicas available from Evonik with, for example, designations VN2 and VN3.

Commonly employed carbon blacks can be used as a conventional filler in an amount ranging from 1 to 80 phr. In another embodiment, from 1 to 50 phr, 1 to 10 phr of carbon black may be used. Representative examples of such carbon blacks include N110, N120, N121, N134, N191N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 210 g/kg and DBP number ranging from 34 to 150 cm³/100 g.

In one embodiment the rubber composition contains from 1 to 20 parts by weight, alternatively 5 to 15 parts by weight, per 100 parts by weight of silica, of a sulfur containing organosilicon compound. In one embodiment, the sulfur containing organosilicon compounds include bis(trialkoxysilylalkyl) polysulfides. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include mercaptosilanes and blocked mercaptosilanes. In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Evonik.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1 to 5 phr. Typical amounts of tackifier resins, if used, comprise 0.5 to 10 phr, usually 1 to 5 phr. Typical amounts ofTypical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 10 phr. Typical amounts of zinc oxide comprise 0to 5 phr. Typical amounts of waxes comprise 1 to 5 phr.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 3, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road and truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

### Examples

A series of rubber compounds were mixed in a multi-step mix procedure following the compositions given in Tables 1 and 2, with all amounts given in phr. Following curing the compound samples were tested for various physical properties, with results shown in Table 3.

As seen in Table 3, addition of the tetrazine and zinc complex compound (E1 vs C1 control) resulted in improved rolling resistance (as indicated by TD 10% ARES) with similar stiffness (ARES G' 10%) but with a faster cure and worse processing. Addition of the retarder with the tetrazine and zinc complex (E2 vs C1) showed the improved rolling resistance but with processing and stiffness equivalent to the control.

**Table 1**

| | |
|---|---|
| Polybutadiene Rubber ¹ | 40 |
| Styrene-Butadiene Rubber ² | 60 |
| Silica | 90 |
| Carbon Black | 2 |
| Tetrazine compound | variable as per Table 2 |
| Waxes³ | 1.5 |
| Naphthenic Oil | 37.5 |
| Antidegradants ⁴ | 3.25 |
| Fatty Acids | 5 |
| Zinc Oxide | 1.75 |
| Sulfur | 1.3 |
| Accelerators ⁵ | 4.75 |
| Silane Disulfide ⁶ | 9 |
| Retarder | variable as per Table 2 |
| Zinc complex | variable as per Table 2 |

| | |
|---|---|
| ¹ Budene 1207, from The Goodyear Tire & Rubber Company ² SLR 4602, from Trinseo ³ Microcrystalline and paraffinic types ⁴ Paraphenylene diamine and dihydroquinoline types ⁵ Sulfenamide and guanidine types ⁶ bis-triethoxysilylpropyl disulfide | |

**Table 2**

| Sample No. | C1 | E1 | E2 |
|---|---|---|---|
| Retarder ⁷ | 0 | 0 | 0.3 |
| Tetrazine compound ⁸ | 0 | 3 | 3 |
| Zinc complex ⁹ | 0 | 4 | 4 |

| | | | |
|---|---|---|---|
| ⁷ N-cyclohexylthiophthalimide ⁸ Tetrazine compound of formula 1, as DS-01 from Otsuka Chemical ⁹ Zinc complex of formula 2, as SureMix CO² from Flow Polymers Group of Cleveland, Ohio. | | | |

**Table 3**

| Cure: 10 minutes @ 170°C | C1 | E1 | E2 |
|---|---|---|---|
| | | | |

| Processing | | | |
|---|---|---|---|
| Uncured G', Mpa¹ | 0.2 | 0.272 | 0.21 |
| | | | |

| Cure | | | |
|---|---|---|---|
| Delta Torque, 150°C² | 20.6 | 16.7 | 15.4 |
| T25 at 150°C, minutes ² | 5.4 | 2.1 | 2.6 |
| T90, at 150°C, minutes ² | 13.1 | 15.3 | 17 |
| | | | |

| Stiffness | | | |
|---|---|---|---|
| G'1%, MPa¹ | 3.2 | 2.3 | 2.2 |
| G' 10%, MPa¹ | 1.9 | 1.5 | 1.5 |
| G'50%, MPa¹ | 1.007 | 0.745 | 0.812 |
| 100% Modulus, DieC | 2.4 | 2.8 | 2.7 |
| 300% Modulus, DieC | 8.5 | 11 | 9.4 |
| SHORE A 3S 23°C | 68 | 66 | 67 |
| G'10% (kPa)³ | 2992 | 2742 | 2811 |
| | | | |

| Hysteresis | | | |
|---|---|---|---|
| TD 10% ¹ | 0.137 | 0.172 | 0.149 |
| Rebound 23°C ⁵ | 36 | 36 | 35 |
| Rebound 100°C ⁵ | 58 | 60 | 59 |
| TD 10% ³ | 0.289 | 0.24 | 0.234 |
| | | | |

| Tear | | | |
|---|---|---|---|
| Tensile, MPa | 12 | 12 | 15 |
| Elongation, % | 436 | 361 | 472 |
| Tear Strength, 95°C (N)⁴ | | | |
| | | | |

| Wet | | | |
|---|---|---|---|
| Rebound 0°C⁵ | 21 | 19 | 19 |
| | | | |

| Wear/Abraison | | | |
|---|---|---|---|
| Abrasion Rate (high)⁴ | 638 | 618 | 647 |

| | | | |
|---|---|---|---|
| ¹ Data according to Rubber Process Analyzer as RPA 2000 instrument by Alpha Technologies, formerly the Flexsys Company and formerly the Monsanto Company. References to an RPA-2000 instrument may be found in the following publications: H. A. Palowski, et al, Rubber World, June 1992 and January 1997, as well as Rubber & Plastics News, Apr. 26 and May 10, 1993 ² Cure properties were determined using a Monsanto oscillating disc rheometer (MDR) which was operated at a temperature of 150 °C and at a frequency of 11 hertz. A description of oscillating disc rheometers can be found in The Vanderbilt Rubber Handbook edited by Robert O. Ohm (Norwalk, Conn., R. T. Vanderbilt Company, Inc., 1990), Pages 554 through 557. The use of this cure meter and standardized values read from the curve are specified in ASTM D-2084. A typical cure curve obtained on an oscillating disc rheometer is shown on Page 555 of the 1990 edition of The Vanderbilt Rubber Handbook. ³ Viscoelastic properties (G' and tan delta) were measured using an ARES Rotational Rheometer rubber analysis instrument which is an instrument for determining various viscoelastic properties of rubber samples, including their storage modulii (G') over a range of frequencies and temperatures in torsion. ⁴ Abrasion was determined as Grosch abrasion rate as run on a LAT-100 Abrader and measured in terms of mg/km of rubber abraded away. The test rubber sample is placed at a slip angle under constant load (Newtons) as it traverses a given distance on a rotating abrasive disk (disk from HB Schleifmittel GmbH). A high abrasion severity test may be run, for example, at a load of 70 newtons, 12° slip angle, disk speed of 20 km/hr for a distance of 250 meters. ⁵ Rebound is a measure of hysteresis of the compound when subject to loading, as measured by ASTM D1054. In FIG. -1 the rebound is given as measured at 100 °C. Generally, the higher the measured rebound at 100 °C, the lower the rolling resistance in a tire containing the given compound. | | | |

## Claims

1. A vulcanizable or vulcanized rubber composition comprising, based on parts by weight per 100 parts by weight elastomer (phr):
100 phr of at least one diene-based elastomer;
from 1 to 80 phr of carbon black;
from 40 to 120 phr of silica;
from 1 to 20 parts by weight of a sulfur-containing organosilane per 100 parts by weight of the silica;
from 0.1 to 10 phr of a tetrazine compound of formula 1 or a salt thereof 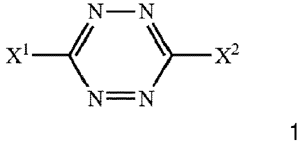 where X¹ and X² each represent a heterocyclic group; and from 0.5 to 10 phr of a zinc complex compound of formula 2 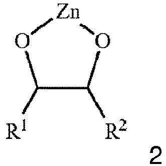 where R¹ and R² are independently selected from the group consisting of hydrogen atoms, alkyl groups, alkylene groups, hydroxyl-substituted alkyl or alkylene groups, amine-substituted alkyl or alkylene groups, and thiol-substituted alkyl or alkylene groups.

2. The rubber composition of claim 1, wherein the rubber composition further comprises from 0.05 to 0.5 phr of N-cyclohexylthiophthalimide.

3. The rubber composition of claim 1 or 2, wherein the zinc complex compound of formula 2 is zinc glycerolate.

4. The rubber composition of claim 1 or 2, wherein R¹ is hydrogen and R² is OH.

5. The rubber composition of at least one of the previous claims, and wherein the rubber composition further comprises at least one auxiliary material selected from the group consisting of fatty acids, fatty alcohols, fatty amines, fatty amides, fatty esters, fatty acid metal salts, polyols, polyethylene glycols, polypropylene glycols, natural hydrocarbon waxes, synthetic hydrocarbon waxes and combinations and blends thereof.

6. The rubber composition of at least one of the previous claims, wherein the tetrazine compound of formula 1 comprises at least one member selected from the group consisting of 3,6-bis(2-pyridyl)-1,2,4,5-tetrazine; 3,6-bis(3-pyridyl)-1,2,4,5-tetrazine; 3,6-bis(4-pyridyl)-1,2,4,5-tetrazine;3,6-bis(2-furanyl)-1,2,4,5-tetrazine; 3,6-bis(3,5-dimethyl-1-pyrazolyl)-1 ,2,4,5-tetrazine; 3,6-bis(2-thienyl)-1,2,4,5-tetrazine; 3-methyl-6-(2-pyridyl)-1,2,4,5-tetrazine; 3,6-bis(2-pyrimidinyl)-1,2,4,5-tetrazine; and 3,6-bis(2-pyrazyl)-1 ,2,4,5-tetrazine.

7. The rubber composition of at least one of the previous claims, wherein the tetrazine compounds of formula 1 comprises at least one member selected from the group consisting of 3,6-bis(2-pyridyl)-1,2,4,5-tetrazine; 3,6-bis(3-pyridyl)-1,2,4,5-tetrazine; 3,6-bis(2-furanyl)-1,2,4,5-tetrazine; and 3,6-bi(4-pyridyl)-1,2,4,5-tetrazine.

8. The rubber composition of at least one of the previous claims, wherein the tetrazine compound of formula 1 is present is an amount ranging from 0.25 to 7 phr.

9. The rubber composition of at least one of the previous claims, wherein the tetrazine compound of formula 1 is present is an amount ranging from 0.5 to 5 phr.

10. The rubber composition of at least one of the previous claims, wherein the sulfur-containing organosilane comprises at least one member selected from bis(trialkoxysilylalkyl) polysulfides, mercaptosilanes, and blocked mercaptosilanes.

11. The rubber composition of at least one of the previous claims, wherein the sulfur containing organosilicon compounds comprises at least one member selected from the group consisting of 3,3'-bis(triethoxysilylpropyl) disulfide, 3,3'-bis(triethoxysilylpropyl) tetrasulfide and 3-(octanoylthio)-1-propyltriethoxysilane.

12. The rubber composition of at least one of the previous claims, wherein the diene-based elastomer comprises at least one member selected from styrene-butadiene rubbers, polybutadiene rubbers, natural rubbers, synthetic polyisoprenes, and functionalized versions thereof.

13. A pneumatic tire comprising the rubber composition of at least one of the previous claims.

14. The pneumatic tire of claim 13 wherein the tire has a tread and wherein the tread comprises the rubber composition.
